# EUROPÄISCHE PATENTANMELDUNG

(11) **EP 1 353 078 A1**
(43) Veröffentlichungstag der Anmeldung: **15.10.2003**
(21) Anmeldenummer: 02023445.6
(22) Anmeldetag: 21.10.2002
(51) Int. Cl.: F16B 19/02

(54) **Zylinderstift**

(30) Priorität: 12.04.2002 DE 10216412
(71) Anmelder: Kramski GmbH, 75179 Pforzheim (DE)
(72) Erfinder: Kramski, Wiestaw, 75217 Birkenfeld (DE)
(74) Vertreter: Blumenröhr, Dietrich Dipl.-Ing.

(57) **Zusammenfassung**

Die Erfindung betrifft Zylinderstifte (1) zum Verbinden und/oder Führen von Bauteilen (A, B) insbesondere im Werkzeug-, Vorrichtungs- und Maschinenbau. Um den Zylinderstift in Radialrichtung nachgiebig zu machen und hierdurch seine Fertigungstoleranz gegebenenfalls ausgleichen zu können, ist der Zylinderstift mit einer zentrischen, sich in Axialrichtung zumindest über einen Teilbereich (1a, 1c) des Stifts erstreckenden Innenbohrung (4, 6) versehen.

## Beschreibung

Die Erfindung betrifft einen Zylinderstift zum Verbinden und/oder Führen von Bauteilen insbesondere im Werkzeug-, Vorrichtungs- und Maschinenbau mit einer zylindrischen Umfangsfläche. Derartige Zylinderstifte werden vor allem eingesetzt zum Arretieren oder Verstiften von Platten, Einzelelementen oder Werkzeugteilen für Schnitt-, Stanz- oder Formwerkzeuge. Die Abmessungen der Zylinderstifte sind durch Normen, insbesondere DIN 6325 bzw. ISO 8734 geregelt, wobei auch die Passung mit m6 bzw. m5 vorgegeben ist, um die Zylinderstifte zusammen mit hieran angepassten Bohrungen die angestrebte Verbindung zweier Bauteile herstellen zu lassen.

Der Anwendungsfall der Schnitt-, Stanz- und Formwerkzeuge sowie die Passungen m6 bzw. m5 zeigen bereits, dass die Zylinderstifte sowie die zugehörigen Bohrungen in den jeweiligen Bauteilen hohen Präzisionsanforderungen unterliegen. Aber selbst wenn diese Anforderungen bedeuten, dass Toleranzen von wenigen Mikrometern eingehalten werden müssen, so können sich die Toleranzen zu einem entsprechend großen Übermaß von beispielsweise bis zu 5 µm addieren (also grob gesagt verdoppeln), wodurch nicht mehr allen Präzisionsanforderungen genügt werden kann. Denn ein zu großes Übermaß der Passung von Zylinderstift und Bohrung führt im Extremfall dazu, dass die gegenseitige Pressung zu hoch wird, woraus ein gegenseitiges Verschweißen der Materialien von Zylinderstift und Bohrungswandung resultiert, was allgemein als "Fressen" bezeichnet wird. Dieses "Fressen" führt zu einer beschädigten bzw. zerstörten Bohrungswandung, so dass das zugehörige Bauteil im Bereich dieser Bohrung nach Entfernen des verschweißten Zylinderstiftes ohne Nacharbeiten nicht mehr neu verstiftet werden kann.

Hiervon ausgehend liegt der vorliegenden Erfindung die Aufgabe zugrunde, einen Zylinderstift der eingangs genannten Art zur Verfügung zu stellen, der eine Verbindung und/oder Führung von Bauteilen mit größeren Toleranzen ermöglicht, ohne die Präzision negativ zu beeinflussen. Außerdem soll ein wiederholtes Demontieren ohne Beschädigung der Bohrungswandung, also ohne ein "Fressen" möglich und demnach die Pressung zwischen Zylinderstift und Bohrung nicht zu hoch sein.

Diese Aufgabe wird erfindungsgemäß dadurch gelöst, dass der Zylinderstift mit einer zentrischen, sich in Axialrichtung zumindest über einen wesentlichen Teilbereich der axialen Länge des Stifts erstreckenden Innenbohrung versehen ist, wodurch sich der Vorteil ergibt, dass der Zylinderstift zumindest in diesem die Innenbohrung aufweisenden Teilbereich in Radialrichtung nachgiebig ist, sofern die Innenbohrung verglichen mit dem Außendurchmesser des Zylinderstifts entsprechend groß und die so belassene Wandstärke des Zylinderstifts entsprechend klein bemessen ist. Ein solcher radial nachgiebiger Zylinderstift bedeutet nun den wesentlichen Vorteil, dass die Fertigungstoleranzen des Zylinderstifts nicht mehr ins Gewicht fallen und keine Auswirkungen mehr haben, da ein etwaiges Übermaß des Zylinderstifts durch die Radialnachgiebigkeit ausgeglichen werden kann und hierdurch nicht mehr zum Tragen kommt.

Voraussetzung für dieses Eliminieren der Auswirkungen der Zylinderstift-Toleranz ist die Herstellung des Zylinderstifts hinsichtlich eines Außendurchmessers mit grundsätzlichem Übermaß, wobei der Zylinderstift absichtlich mit einem größeren Durchmesser als gefordert gefertigt wird, so dass sich nach Abzug der Fertigungstoleranzen gerade der gewünschte Durchmesser ergibt. Dieses Übermaß kann beispielsweise in der Größenordnung von 5 bis 10 µm liegen, wodurch sichergestellt wird, dass der Zylinderstift auf jeden Fall einen Durchmesser erhält, der gleich oder größer dem geforderten Durchmesser ist.

Was die Innenbohrung betrifft, so ist hieran wesentlich, dass diese genau zentrisch ist, weshalb es empfehlenswert ist, diese zur Erzeugung einer exakten zentrischen Symmetrie geschliffen auszuführen. Denn würde die Innenbohrung leicht versetzt zur Mittelachse des Zylinderstift angeordnet sein, so wäre die elastische Nachgiebigkeit nicht mehr über den Umfang des Zylinderstifts gleich groß und dies hieße dann, dass die beiden durch den Zylinderstift aneinander festzulegenden Bauteile leicht versetzt zueinander positioniert würden.

Die Innenbohrung kann sich ausgehend von einem stirnseitigen Ende des Zylinderstifts in Axialrichtung über die gesamte Länge des Zylinderstifts erstrecken, so dass der Zylinderstift quasi zu einer zylindrischen Hülse wird. Ebenso ist es aber auch möglich, dass der Zylinderstift unterteilt ist in einen die Innenbohrung aufweisenden, in Radialrichtung nachgiebigen und sich bis zu einem axialen Ende des Stifts erstreckenden ersten Teilbereich, einen benachbart dazu angeordneten, insbesondere mit einer Querschnittsreduzierung der Umfangsfläche versehenen taillierten Mittelbereich und einen benachbart dazu und sich bis zum anderen axialen Ende des Stifts erstreckenden, ebenfalls eine Innenbohrung aufweisenden, in Radialrichtung nachgiebigen zweiten Teilbereich. Werden die axialen Längen der beiden Teilbereiche und des Mittelbereichs so aufeinander abgestimmt, dass der Zylinderstift entweder radial nachgiebig ist oder aufgrund der Taillierung ohnehin mit geringerem Außendurchmesser versehen ist, so lässt sich sicherstellen, dass der Zylinderstift über seine gesamte Länge die geforderte Abmessung aufweist.

Der taillierte Mittelbereich, der gegenüber der benachbarten Innenbohrung eine Schulter bilden soll und deshalb entweder ganz ohne Innenbohrung oder zumindest mit einer Innenbohrung mit geringerem Durchmesser als die benachbarte Innenbohrung sein sollte, verschafft eine verbesserte Handhabbarkeit des Zylinderstifts dadurch, dass er das Einschlagen und Ausschlagen des Zylinderstifts ermöglicht, hierbei aber aufgrund der Innenbohrung das Einschlagwerkzeug führt, so dass das Werkzeug beim Einschlagen nicht seitlich abrutschen und das benachbarte Bauteil beschädigen kann.

Es sind zwar bereits im Stand der Technik Zylinderstifte mit Innengewinde (nach DIN 7979 D bzw. ISO 8735) und somit auch mit Innenbohrung bekannt und beispielsweise für den Einbau in Sacklochbohrungen und damit zum Herausziehen des Zylinderstifts aus dieser Bohrung mit Hilfe des Innengewindes bekannt; dieses Innengewinde stellt aber weder eine Innenbohrung mit exakter zentrischer Symmetrie dar, noch ermöglicht das Innengewinde in seiner Form eine radiale Nachgiebigkeit des Zylinderstifts, zumal sich das Innengewinde nur über einen sehr kurzen Teilbereich erstreckt. Solche Innengewinde sind natürlich auch - bzw. trotzdem - bei den erfindungsgemäßen Zylinderstiften in solchen Bereichen möglich, die - wie der insbesondere taillierte Mittelbereich - keine radiale Nachgiebigkeit aufweisen.

Im Übrigen können die erfindungsgemäßen Zylinderstifte mit Innenbohrung natürlich ebenso wie die herkömmlichen Zylinderstifte ausgeführt sein, was deren Stirnseiten betrifft und beispielsweise zur leichteren Zentrierung des Zylinderstifts beim Einstecken in eine Bohrung eine endständige Querschnittsreduzierung aufweisende, angefaste und/oder angeschliffene Seitenflächen o. ä. aufweisen. Für ein sicheres Einstecken des Zylinderstifts in eine Bohrung ist es außerdem von Vorteil, wenn der Zylinderstift im Bereich zumindest eines axialen Endes zur lokalen Reduzierung seiner radialen Nachgiebigkeit eine vergrößerte Wandstärke aufweist. Hierdurch wird verhindert, dass bei einer ungleich über den Umfang des Zylinderstifts verteilten Krafteinwirkung diese Kraft lokal in einem Umfangsflächenbereich zu groß wird und den Zylinderstift verformt. Eine solche ungleiche Krafteinwirkung könnte beispielsweise dann auftreten, wenn der Zylinderstift beim Einstecken in eine Bohrung zunächst einmal leicht geneigt zur Bohrungsachse gehalten wird, wodurch es höher belastete und geringer belastete radial nachgiebige Umfangsflächenbereiche gibt. Dies vermeidet die lokal vergrößerte endständige Wandstärke des Zylinderstifts, indem die Innenbohrung im Bereich der vergrößerten Wandstärke einen lokal reduzierten Durchmesser aufweist, d. h. die im Wesentlichen zylindrische Innenbohrung ist zum axialen Ende des Zylinderstiftes hin in ihrem Durchmesser reduziert, hierdurch die verbleibende Wandstärke des Zylinderstifts entsprechend vergrößert und der Stift in diesem Bereich lokal in Radialrichtung unnachgiebiger.

Das wesentliche Merkmal der vorliegenden Erfindung, nämlich die radiale Nachgiebigkeit durch die sich über einen wesentlichen Teilbereich der axialen Länge des Stifts erstreckende Innenbohrung lässt sich nicht nur zum Verbinden bzw. Verstiften von Bauteilen, sondern auch zum Führen einsetzen, wenn die Zylinderstifte als sogenannte Führungspins fungieren. Führungspins werden in eine Bohrung eines Bauteils eingesteckt, stehen einseitig gegenüber diesem Bauteil vor und dienen als seitliche Führung für beispielsweise ein sich parallel zur Bauteiloberfläche bewegendes Bandmaterial. Damit sich dieses Bandmaterial nicht gegenüber dem Bauteil abhebt, weisen die Führungspins an ihrem zu sehr vom Bauteil vorstehenden Ende eine kopfähnliche Querschnittsvergrößerung der Umfangsfläche auf. Diese kopfähnlichen Querschnittsvergrößerungen können natürlich auch dazu ausgenutzt werden, den Zylinderstift aus der Bohrung wieder herauszuziehen.

Bisher wurden solche Führungspins dadurch an einem Bauteil festgelegt, dass sie von der Unterseite des Bauteils her verschraubt werden, während sie gegenüber der Oberseite vorstehen und dort das sich bewegende Bandmaterial führen. Indem nun der erfindungsgemäße Zylinderstift mit Übermaß und radialer Nachgiebigkeit in die Bohrung des Bauteils eingesetzt wird, fixiert er sich von selbst in dieser Bohrung und somit in dem Bauteil und muss nicht mehr verschraubt oder in sonstiger Weise gegen ein axiales Herausziehen gesichert werden.
- Figur 1: einen Zylinderstift in einem zwei Bauteile aneinander festlegenden Zustand in Seitenansicht;
- Figur 2: eine alternative Ausführungsform zu dem Zylinderstift aus Figur 1; und
- Figur 3: einen als Führungspin fungierenden Zylinderstift.

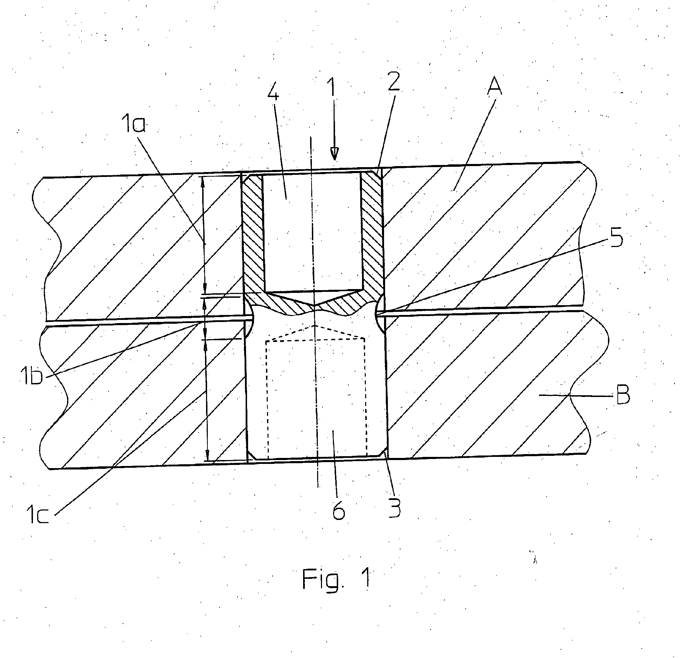

Hierbei ist ein Zylinderstift 1 in eine Bohrung 2 eines Bauteils A sowie eine Bohrung 3 eines Bauteils B eingesteckt und legt diese Bauteile derart aneinander fest, dass die Mittelachsen der Bohrungen 2 und 3 exakt miteinander fluchten. Der Zylinderstift 1, der in Figur 1 im oberen Abschnitt im Axialschnitt dargestellt ist, weist einen ersten Teilbereich 1a auf, der mit einer zentrischen, sich ausgehend von dem stirnseitigen Ende des Stifts in Axialrichtung erstreckenden Innenbohrung 4 versehen ist, wobei sich diese Innenbohrung 4 bis nahezu zur axialen Mitte des Zylinderstifts 1 erstreckt. Benachbart zu diesem ersten Teilbereich 1a ist ein Mittelbereich 1b, in dem der Zylinderstift mit einer Querschnittsreduzierung 5 versehen ist, durch die der Außendurchmesser des Zylinderstifts über den ganzen Umfang so stark herabgesetzt ist, dass sichergestellt wird, dass dieser taillierte Mittelbereich 1b keinen Kontakt mit der Innenwand der Bohrung 2 bzw. der Bohrung 3 aufweist. In diesem taillierten Mittelbereich 1b muss der Zylinderstift demnach nicht radial nachgiebig ausgeführt sein. Anschließend an den Mittelbereich 1b erstreckt sich ein zweiter Teilbereich 1c mit einer zentrischen Innenbohrung 6 von nahezu der axialen Mitte bis zum anderen stirnseitigen Ende des Zylinderstifts 1 im Bereich des Bauteils B. Dieser zweite Teilbereich 1c und die Innenbohrung 6 sind dem ersten Teilbereich 1a bzw. der Innenbohrung 4 entsprechend ausgeführt.

Die Außenwand des Zylinderstifts, also der die Innenbohrung 4, 6 umgebende Stiftbereich sollte so dünnwandig geführt sein, dass die radiale Nachgiebigkeit in der gewünschten Größenordnung von wenigen Mikrometern möglich ist.

Der Vorteil der vorliegenden Erfindung liegt nun darin, dass selbst wenn die Bohrungen 2 und 3 mit einer üblichen Toleranz von beispielsweise 5 µm ausgeführt sind, der absichtlich mit Übermaß gefertigte Zylinderstift aufgrund der Innenbohrungen 4 und 6 radial nachgiebig ist, so dass die Fertigungstoleranzen des Zylinderstifts, die ebenfalls in der Größenordnung von einigen µm liegen, nicht zum Tragen kommen.

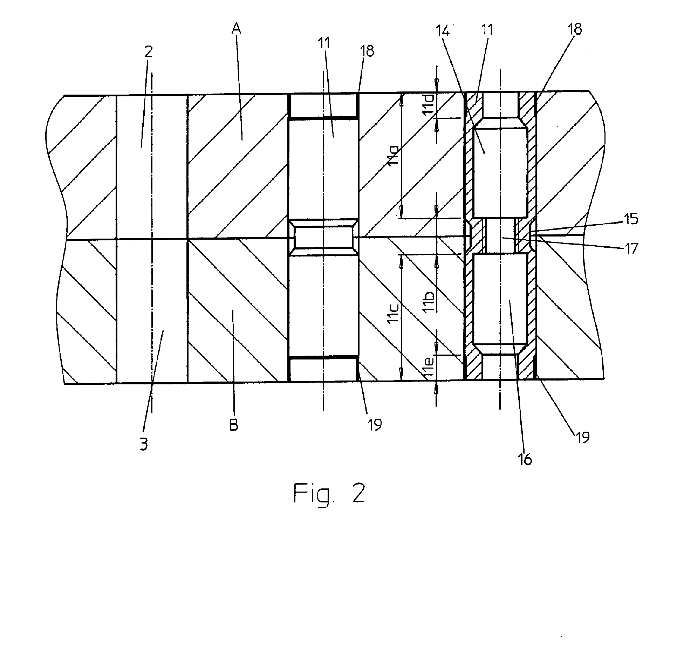

Figur 2 zeigt eine alternative Ausführungsform eines Zylinderstifts 11, der zwei Bauteile A und B über in diesen Bauteilen vorgesehene Bohrungen 12, 13 miteinander verbindet. Dieser Zylinderstift 11 weist gegenüber dem Zylinderstift 1 drei Unterschiede auf, die natürlich auch einzeln verwirklicht werden können: Im Mittelbereich 11b, der wegen seiner ihm fehlenden Innenbohrung eine Taillierung 15 aufweist, ist mit einem die beiden Innenbohrungen 14, 16 miteinander verbindenden Gewinde versehen, das dazu dient, den Zylinderstift aus der Bohrung bzw. den Bohrungen herauszuziehen. Diese Gewindebohrung 17 ist in Form und Funktion zu unterscheiden von den Innenbohrungen 14, 16, die die erfindungsgemäße radiale Nachgiebigkeit zur Verfügung stellen, während die Gewindebohrung 17 mit nahezu beliebigem Durchmesser (jedoch kleiner als der Durchmesser der Innenbohrung) ausgeführt sein kann und in der Regel nicht für eine Nachgiebigkeit des Mittelbereiches 11b sorgt.

Das zweite Unterscheidungsmerkmal gegenüber dem Zylinderstift 1 besteht darin, dass die leichte stirnseitige Anfasung des Zylinderstiftes 1 beim Zylinderstift 11 durch eine deutliche endständige Querschnittsreduzierung 18, 19 der Zylinderstiftumfangsfläche ersetzt ist. Diese lokale Querschnittsreduzierung sorgt dafür, dass der Zylinderstift leichter in die Bohrung eingesteckt werden und sich hierbei besser selbst zentrieren kann.

Das dritte Unterscheidungsmerkmal liegt nun darin, dass beim Zylinderstift 11 der in Radialrichtung nachgiebige erste Teilbereich 11a und der ebenfalls in Radialrichtung nachgiebige zweite Teilbereich 11c dadurch eine lokal reduzierte radiale Nachgiebigkeit in ihren endständigen Bereichen aufweisen, dass die Wandstärke in den endständigen Bereichen 11d, 11e eine vergrößerte Wandstärke aufweisen, indem der Durchmesser der Innenbohrungen 14, 16 lokal reduziert ist.

Zwar bedeutet diese Durchmesseränderung der Innenbohrungen einen leicht erhöhten Fertigungsaufwand, auf der anderen Seite sorgt aber die hierdurch erhaltene vergrößerte Wandstärke dafür, dass beim Einsetzen des Zylinderstifts in die Bauteilbohrung die erfindungsgemäße radiale Nachgiebigkeit nicht zu einer Beschädigung des Zylinderstifts führt, wenn die durch das Übermaß hervorgerufenen Verformungskräfte sich nicht gleichmäßig über den Zylinderstiftumfang verteilen.

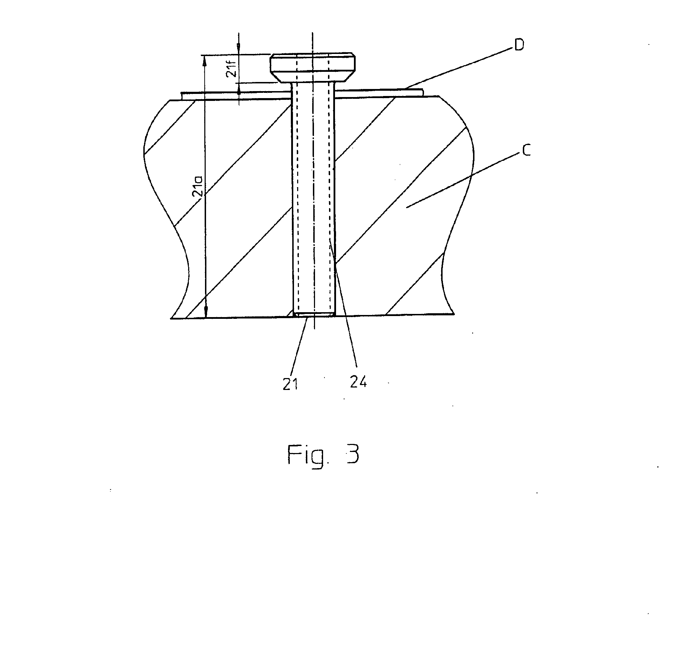

Schließlich zeigt Figur 3 einen Zylinderstift 21 in Form eines Führungspins, der in eine Bohrung eines Bauteils C eingesteckt wird und sich dort durch seine radiale Nachgiebigkeit selbst verankert. Hierzu ist der Zylinderstift 21 mit einer Innenbohrung 24 versehen, die sich über nahezu die gesamte axiale Länge des Zylinderstifts 21 in einem ersten Teilbereich 21a erstreckt. An diesem radial nachgiebigen ersten Teilbereich 21a schließt sich ein unnachgiebiger axialer Teilbereich 21b an, der in der Regel außerhalb des Bauteils C angeordnet wird. Und schließlich ist benachbart zum Mittelbereich 21b ein Kopfbereich 21f, der einen größeren Außendurchmesser aufweist als der restliche Zylinderstift und hierdurch als Abhebesicherung für das von diesem Führungspin zu führende Bandmaterial d fungiert.

Bisher mussten solche Führungspins immer von der Unterseite des Bauteils C her verschraubt werden. Dies ist nun nicht mehr erforderlich, indem der mit Übermaß gefertigte Führungspin in die Bohrung des Bauteils C eingesteckt und dort aufgrund seiner radialen Nachgiebigkeit unter Vorspannung an der Bohrungswandung anliegt und sich hierbei selbst verankert.

Das Hauptaugenmerk bei der Verwendung des erfindungsgemäßen Zylinderstifts als Führungspin liegt also nicht in der hohen Genauigkeit bzw. dem Toleranzausgleich beim Verbinden zweier Bauteile, sondern in der leichten Montierbarkeit des mit der Innenbohrung versehenen Zylinderstifts.

## Patentansprüche

1. Zylinderstift zum Verbinden und/oder Führen von Bauteilen insbesondere im Werkzeug-, Vorrichtungs- und Maschinenbau mit einer zylindrischen Umfangsfläche,
**dadurch gekennzeichnet,**
**dass** der Zylinderstift (1, 11, 21) mit einer zentrischen, sich in Axialrichtung zumindest über einen wesentlichen Teilbereich (1a, 1c, 11a, 11c, 21a) der axialen Länge des Stifts erstreckenden Innenbohrung (4, 6, 14, 16, 24) versehen ist.

2. Zylinderstift nach Anspruch 1,
**dadurch gekennzeichnet**
**dass** sich die Innenbohrung (4, 6, 14, 16, 24) ausgehend von einem und/oder jedem stirnseitigen Ende des Zylinderstifts (1, 11, 21) in Axialrichtung erstreckt.

3. Zylinderstift nach Anspruch 1 oder 2,
**dadurch gekennzeichnet,**
**dass** sich die Innenbohrung über die gesamte Länge des Zylinderstifts erstreckt.

4. Zylinderstift nach Anspruch 2,
**dadurch gekennzeichnet,**
**dass** der Zylinderstift (1) unterteilt ist in einen die Innenbohrung (4) aufweisenden, in Radialrichtung nachgiebigen und sich bis zu einem axialen Ende des Stifts (1) erstreckenden ersten Teilbereich (1a), einen benachbart dazu angeordneten Mittelbereich (1b) und einen benachbart dazu und sich bis zum anderen axialen Ende des Stifts (1) erstreckenden, ebenfalls eine Innenbohrung (6) aufweisenden, in Radialrichtung nachgiebigen zweiten Teilbereich (1c).

5. Zylinderstift nach Anspruch 4,
**dadurch gekennzeichnet,**
**dass** der Mittelbereich (1b, 11b) tailliert ausgebildet und mit einer Querschnittsreduzierung (5, 15) der Umfangsfläche versehen ist.

6. Zylinderstift nach Anspruch 4,
**dadurch gekennzeichnet,**
**dass** der taillierte Mittelbereich (1b) die beiden Innenbohrungen (4, 6) voneinander trennt.

7. Zylinderstift nach Anspruch 4,
**dadurch gekennzeichnet,**
**dass** die beiden Innenbohrungen (14, 16) durch eine einen kleineren Durchmesser als die Innenbohrungen aufweisende Gewindebohrung (17) miteinander verbunden sind.

8. Zylinderstift nach Anspruch 1,
**dadurch gekennzeichnet,**
**dass** die Innenbohrung (4, 6, 14, 16, 24) eine zylindrische Form aufweist.

9. Zylinderstift nach Anspruch 1,
**dadurch gekennzeichnet,**
**dass** der Zylinderstift (11) im Bereich zumindest eines axialen Endes zur lokalen Reduzierung der radialen Nachgiebigkeit eine vergrößerte Wandstärke (11d, 11e) aufweist.

10. Zylinderstift nach Anspruch 9,
**dadurch gekennzeichnet,**
**dass** die Innenbohrung (14, 16) im Bereich (11d, 11e) der vergrößerten Wandstärke des Zylinderstifts (11) einen lokal reduzierten Durchmesser aufweist.

11. Zylinderstift nach Anspruch 1,
**dadurch gekennzeichnet,**
**dass** der Zylinderstift (1, 11) im Bereich zumindest eines axialen Endes an seiner Umfangsfläche angefast und/oder mit einer endständigen Querschnittsreduzierung (18, 19) versehen ist.

12. Zylinderstift nach zumindest einem der vorstehenden Ansprüche,
**dadurch gekennzeichnet,**
**dass** der Zylinderstift (1, 11, 21) hinsichtlich seines Außendurchmessers mit Übermaß hergestellt ist.

13. Zylinderstift nach zumindest Anspruch 12,
**dadurch gekennzeichnet,**
**dass** das Übermaß in der Größenordnung von 0,005 bis 0,020 mm liegt.

14. Zylinderstift nach zumindest einem der vorstehenden Ansprüche,
**dadurch gekennzeichnet,**
**dass** die Innenbohrung zur Erzeugung einer exakten zentrischen Symmetrie geschliffen ist.

15. Zylinderstift nach Anspruch 1,
**dadurch gekennzeichnet,**
**dass** der Zylinderstift (21) als Führungspin fungiert und hierzu an seinem einen axialen Ende (21a) die Innenbohrung (24) aufweist und an seinem anderen axialen Ende (21f) eine kopfähnliche Querschnittsvergrößerung der Umfangsfläche als Abhebesicherung.
